# EUROPÄISCHE PATENTANMELDUNG

(11) **EP 4 293 453 A1**
(43) Veröffentlichungstag der Anmeldung: **20.12.2023**
(21) Anmeldenummer: 22179291.4
(22) Anmeldetag: 15.06.2022
(51) Int. Cl.: G05B 19/418, G05B 13/02

(54) **VERFAHREN ZUM OPTIMIEREN, VORHERSAGEN ODER BEWERTEN EINER TECHNISCHEN ANLAGE**

(71) Anmelder: Siemens Aktiengesellschaft, 80333 München (DE)
(72) Erfinder: Röhrl, Manuel, 81673 München (DE)
(74) Vertreter: Siemens Patent Attorneys

(57) **Zusammenfassung**

Vorgeschlagen wird ein Verfahren zum betriebsbegleitenden Optimieren einer technischen Anlage (3), insbesondere Prozessoder Fertigungsanlage, bei dem parallel zu einem Betrieb der technischen Anlage (3) ein Verhalten der technischen Anlage (3) unter Verwendung eines computerimplementierten Modells der technischen Anlage (3) oder eines Typs der technischen Anlage (3) simuliert wird, wobei als Ergebnis der Simulation wenigstens ein Parameter erzeugt wird, der für eine Optimierung des Betriebs der technischen Anlage (3) verwendet wird.

Das Verfahren ist dadurch gekennzeichnet, dass ein Teil des computerimplementierten Modells als ein neuronales Netz (2) ausgebildet ist, welches vor dem Beginn der Simulation unter Verwendung eines weiteren Modells der technischen Anlage (3) oder eines Teils der technischen Anlage (3) trainiert worden ist.

## Beschreibung

Die Erfindung betrifft ein Verfahren zum betriebsbegleitenden Optimieren einer technischen Anlage, insbesondere Prozess- oder Fertigungsanlage. Außerdem betrifft die Erfindung ein Verfahren zum betriebsbegleitenden Vorhersagen eines zukünftigen Zustandes einer technischen Anlage, insbesondere Prozess- oder Fertigungsanlage. Zudem betrifft die Erfindung ein Verfahren zum betriebsbegleitenden Bewerten eines aktuellen Betriebs einer technischen Anlage, insbesondere Prozess- oder Fertigungsanlage.

Aufgrund der Erhöhung des Anteils der intermittierenden erneuerbaren Energien am Energiemix ist ein zunehmend flexibler Betrieb von Gas- und Dampfkraftwerken (GuD) erforderlich. Deshalb ist es wichtig, das dynamische Verhalten (z.B. Lastwechsel, Startvorgänge) besser zu verstehen.

Generell sind dynamische Modelle wünschenswert, um parallel zum Anlagenbetrieb
1) die aktuelle Leistung zu bewerten,
2) optimale Regelungsstrategien (z.B. Model-Predictive-Control, MPC) zu entwickeln und
3) das dynamische Verhalten z.B. bei Laständerungen vorherzusagen.

Bestehende dynamische Modellierungsansätze mit sehr genauer Thermodynamik, einer hohen räumlichen Diskretisierung und einer gründlichen Parameterschätzung sind jedoch oft nicht für Echtzeitanwendungen geeignet und zudem sehr aufwendig zu generieren.

Das Problem wird bisher auf zwei verschiedene Arten gelöst:
1. Es werden rein gleichungsbasierte Modelle verwendet, welche sehr aufwendig zu erstellen sind und entsprechendes Expertenwissen erfordern. Die Parameter dieser Modelle werden meist mit Verfahren wie der Methode der kleinsten Quadrate geschätzt. Die resultierenden Modelle sind, wenn sie das dynamische Verhalten genau nachbilden, oft sehr rechenintensiv und nicht schnell genug auswertbar für den Betriebsbegleitenden Einsatz.
2. Es werden keine oder nur reduzierte und ungenaue dynamischen Modelle angewendet. In diesem Fall ist der Betrieb der Anlage und deren Effizienz von der Expertise von erfahrenen Operatoren abhängig.

In der EP 3 916 493 A1 ist ein Verfahren zur Prognose eines Systemzustandes eines technischen Systems offenbart.

Der Erfindung liegt die Aufgabe zugrunde, ein Verfahren zum anzugeben, welches die Effizienz und die Flexibilität einer Optimierung eines Betriebs der technischen Anlage, eine Vorhersage eines Zustandes der technischen Anlage oder eine Bewertung eines aktuellen Zustandes der technischen Anlage erhöht.

Diese Aufgabe wird gelöst durch ein Verfahren zum betriebsbegleitenden Optimieren einer technischen Anlage, insbesondere Prozess- oder Fertigungsanlage mit den Merkmalen des Anspruchs 1. Außerdem wird die Aufgabe gelöst durch ein Verfahren zum betriebsbegleitenden Vorhersagen eines zukünftigen Zustandes einer technischen Anlage, insbesondere Prozess- oder Fertigungsanlage mit den Merkmalen des Anspruchs 2. Außerdem wird die Aufgabe gelöst durch ein Verfahren zum betriebsbegleitenden Bewerten eines aktuellen Betriebs einer technischen Anlage, insbesondere Prozess- oder Fertigungsanlage mit den Merkmalen des Anspruchs 3. Zudem wird die Aufgabe gelöst durch ein Leitsystem für eine technische Anlage, insbesondere Fertigungs- oder Prozessanlage, und ein Computerprogrammprodukt gemäß Anspruch 8. Vorteilhafte Weiterbildungen ergeben sich aus den abhängigen Ansprüchen.

Bei einem erfindungsgemäßen Verfahren zum betriebsbegleitenden Optimieren einer technischen Anlage, insbesondere Prozess- oder Fertigungsanlage, wird parallel zu einem Betrieb der technischen Anlage ein Verhalten der technischen Anlage unter Verwendung eines computerimplementierten Modells simuliert, wobei als Ergebnis der Simulation wenigstens ein Parameter erzeugt wird, der für eine Optimierung des Betriebs der technischen Anlage verwendet wird. Das Verfahren ist dadurch gekennzeichnet, dass wenigstens ein Teil des computerimplementierten Modells als ein neuronales Netz ausgebildet ist, welches vor dem Beginn der Simulation unter Verwendung eines weiteren Modells der technischen Anlage oder eines Teils der technischen Anlage trainiert worden ist.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Es ist an sich bekannt, parallel zu einem Betrieb einer technischen Anlage den Betrieb unter Verwendung eines computerimplementierter Modells der technischen Anlage zu simulieren. Die Simulation erzeugt als Ergebnis wenigstens einen Parameter, der für eine Optimierung des Betriebs der technischen Anlage verwendet wird.

Das computerimplementierte (mathematische) Modell kann prinzipiell kein zu hundert Prozent genaues Abbild der betrachteten technischen Anlage sein. Vielmehr ist jedes Modell mit einer gewissen Unsicherheit behaftet. Wie einleitend ausgeführt, ließe sich das computerimplementierte Modell durch eine immer genauere Beschreibung der beteiligten physikalischen und chemischen Vorgänge verfeinern. Das Erstellen von immer genaueren Modellen ist jedoch mit einem immer höheren finanziellen und zeitlichen Aufwand verbunden.

Die Erfindung basiert auf der besonders vorteilhaften Idee, das computerimplementierte Modell teilweise als ein neuronales Netz auszubilden. Dieses neuronale Netz wird vor der betriebsparallelen Simulation unter Verwendung eines weiteren Modells der (konkreten) technischen Anlage oder eines Teils der technischen Anlage trainiert.

Mit anderen Worten wird im Rahmen des erfindungsgemäßen Verfahrens zur Simulation des Betriebsverhaltens der technischen Anlage ein zunächst grundlegendes computerimplementiertes Modell verwendet, das nicht vollständig auf die konkrete technische Anlage ausgelegt sein muss. Vielmehr ist das computerimplementierte Modell zunächst nur für einen bestimmten Typ der technischen Anlage ausgelegt, beispielsweise für einen Typ "Wasserkraftanlage", einen Typ "Förderanlage" oder einen Typ "Produktionsanlage".

Ein Teil des computerimplementierten Modells ist als neuronales Netz ausgebildet, was zunächst nicht trainiert ist. Unter einer Verwendung eines Modells der konkreten technischen Anlage (oder eines Teils der Anlage) wird dieses neuronale Netz trainiert bzw. angelernt. Das computerimplementierte Modell wird dadurch auf die konkrete technische Anlage ausgerichtet. Dies kann auch als Instanziierung des computerimplementierten Modells bezeichnet werden. Das Training des neuronalen Netzes erfolgt dabei durch eine Simulation eines Betriebsverhaltens der konkreten technischen Anlage unter Verwendung des weiteren Modells, wobei hieraus resultierende Parameter des Betriebsverhaltens zum Trainieren / Anlernen des neuronalen Netzes verwendet werden.

Nach der Trainingsphase des neuronalen Netzes wird die eigentliche Optimierung des Betriebsverhaltens der technischen Anlage durch die betriebsparallele Simulation vorgenommen.

Das erfindungsgemäße Verfahren zeichnet sich insbesondere dadurch vorteilhaft aus, dass das computerimplementierte (Grund-)Modell einfach und effizient auf die Anforderungen einer konkreten technischen Anlage angepasst werden kann. Im Gegensatz zu der Verwendung eines hochgenauen, umfassenden Modells für die Simulation, was einen enormen Aufwand an Ressourcen mit ich brächte, wird bei dem erfindungsgemäßen Verfahren ein (relativ) einfaches computerimplementiertes (Grund-)Modell verwendet. Die notwendige Komplexität und Dynamik werden dann durch die teilweise Ausbildung des computerimplementierten Netzes als lernfähiges, neuronales Netz erreicht, welches durch ein weiteres (umfassenderes) Modell trainiert wird.

Durch die Wahl der Art des weiteren Modells kann die gewünschte Detailierung des computerimplementierten Modells gesteuert werden. Für eine höhere Genauigkeit wird sinngemäß ein exakteres Modell, für eine geringere Genauigkeit ein einfacheres weiteres Modell für das Trainieren / Einlernen verwendet.

Die zuvor formulierte Aufgabe wird zudem gelöst durch ein Verfahren zum betriebsbegleitenden Vorhersagen eines zukünftigen Zustandes einer technischen Anlage, insbesondere Prozess- oder Fertigungsanlage, bei dem parallel zu einem Betrieb der technischen Anlage ein Verhalten der technischen Anlage unter Verwendung eines computerimplementierten Modells der technischen Anlage oder eines Typs der technischen Anlage simuliert wird, wobei als Ergebnis der Simulation ein zukünftiger Zustand der technischen Anlage an einen Operator der technischen Anlage ausgegeben wird. Dieses Verfahren ist, analog zu dem zuvor erläuterten Verfahren, dadurch gekennzeichnet, dass ein Teil des computerimplementierten Modells als ein neuronales Netz ausgebildet ist, welches vor dem Beginn der Simulation unter Verwendung eines weiteren Modells der technischen Anlage oder eines Teils der technischen Anlage trainiert worden ist.

Durch die Vorhersage eines zukünftigen Zustandes können, automatisiert oder manuell, Korrekturmaßnahmen eingeleitet werden, um einen Betrieb der technischen Anlage anzupassen. Dadurch kann beispielsweise ein Fehlerfall in der technischen Anlage vorhergesagt und vermieden werden. Es können aber auch logistische Aspekte wie die rechtzeitige, vorausschauende Beschaffung von Rohmaterialien, Hilfsgütern oder Maschinen für eine Fertigung oder Produktion von der Vorhersage (und den entsprechenden Maßnahmen) betroffen sein.

Die zuvor formulierte Aufgabe wird zudem gelöst durch ein Verfahren zum betriebsbegleitenden Bewerten eines aktuellen Betriebs einer technischen Anlage, insbesondere Prozess- oder Fertigungsanlage, bei dem parallel zu einem Betrieb der technischen Anlage ein Verhalten der technischen Anlage unter Verwendung eines computerimplementierten Modells der technischen Anlage oder eines Typs der technischen Anlage simuliert wird, wobei als Ergebnis der Simulation wenigstens ein Parameter zur Bewertung des aktuellen Betriebs erzeugt und an einen Operator der technischen Anlage ausgegeben wird. Dieses Verfahren ist dadurch gekennzeichnet, dass ein Teil des computerimplementierten Modells als ein neuronales Netz ausgebildet ist, welches vor dem Beginn der Simulation unter Verwendung eines weiteren Modells der technischen Anlage oder eines Teils der technischen Anlage trainiert worden ist.

Analog zu der Vorhersage eines zukünftigen Zustandes kann durch die betriebsparallele Simulation des Verhaltens der technischen Anlage auch eine aktuelle Bewertung des Betriebs der technischen Anlage erfolgen. Die betriebsparallele Simulation kann Kriterien wie eine momentane Effizienz, momentane CO₂-Emissionen oder tatsächliche Auslastung des Betriebs ermitteln. Diese Kennzahlen wiederum dienen als Entscheidungshilfen und können z.B. die Dokumentation von Sachverhalten, den Vergleich unterschiedlicher Regelstrategien oder Rückschlüsse auf den Abnutzungszustand von Komponenten ermöglichen.

Bei allen zuvor ausgeführten Verfahren kann eine Abweichung des Verhaltens des weiteren Modells von dem Verhalten der realen technischen Anlage kleiner sein als eine Abweichung des Verhaltens des computerimplementierten Modells von dem Verhalten der technischen Anlage. Mit anderen Worten kann das weitere Modell genauer / exakter sein als das computerimplementierte (Grund-)Modell. Dadurch lässt sich die Genauigkeit des (Grund-)Modells einfach erhöhen, ohne dass (aufgrund der Verwendung des neuronalen Netzes) ein signifikanter Mehraufwand für die Durchführung der Simulation entstünde.

Im Rahmen einer vorteilhaften Weiterbildung der Erfindung wird das computerimplementierte Modell während des Betriebs der technischen Anlage durch von der technischen Anlage erzeugte Daten angepasst, um die Abweichung des Verhaltens des computerimplementierten Modells von dem Verhalten der technischen Anlage zu reduzieren. Dadurch lassen sich auch unvorhersehbare Zustände der technischen Anlage bei der betriebsparallelen Simulation berücksichtigen, was die Flexibilität und Genauigkeit der Simulation erhöhen kann. Dabei wird vorteilhafterweise der Teil des computerimplementierten Modells angepasst, welches als neuronales Netz ausgebildet ist. Das neuronale Netz kann als selbstlernendes System prinzipbedingt einfacher an aktuelle Zustände angepasst werden als komplexe (gleichungsbasierte) mathematische Modelle.

Die zuvor formulierte Aufgabe wird außerdem gelöst durch ein Leitsystem für eine technische Anlage, insbesondere Fertigungs- oder Prozessanlage, das dazu ausgebildet ist, ein Verfahren wie zuvor erläutert auszuführen.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Besonders bevorzugt umfasst das Leitsystem einen Engineering Station Server, durch den eine Automatisierung der technischen Anlage vorgebbar ist. Unter einem "Engineering Station Server" wird vorliegend ein Server verstanden, der dazu ausgebildet ist, verschiedene Hardware- und Software-Projekte für ein Prozessleitsystem einer technischen Anlage zu erstellen, verwalten, archivieren und dokumentieren. Mithilfe von speziellen Software-Projektierungswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Das Leitsystem kann dabei vorteilhafterweise einen Operator Station Server zum Erzeugen von Visualisierungsinformationen für ein Bedienen und Beobachten der technischen Anlage auf Grundlage der von dem Engineering Station Server empfangenen Automatisierung aufweisen. Außerdem kann das Leitsystem einen Operator Station Client zur visuellen Darstellung der von dem Operator Station Server erzeugten Visualisierungsinformationen aufweisen.

Unter einem "Operator Station Server" wird dabei ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Außerdem wird die Aufgabe gelöst durch ein Computerprogrammprodukt, umfassend Befehle, die bei der Ausführung des Programms durch einen Computer diesen veranlassen, ein Verfahren wie zuvor erläutert auszuführen.

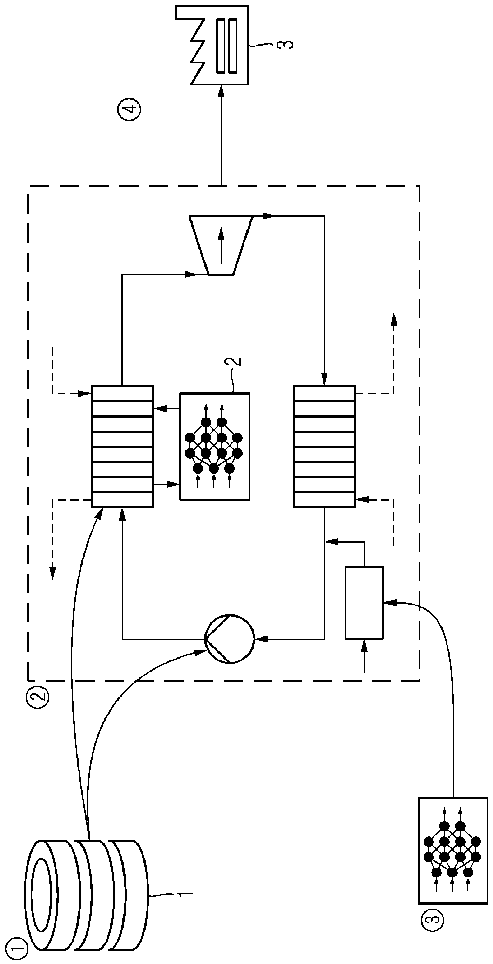

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

In der Figur ist ein erfindungsgemäßes Verfahren schematisch erläutert. Die im Folgenden beschriebenen Verfahrensschritte werden automatisiert von einem Leitsystem einer technischen Anlage 3 durchgeführt, welches wenigstens einen Computer, beispielsweise einen Operator Station Server, umfasst, welcher die Verfahrensschritte ausführt. Das Verfahren wird in diesem Ausführungsbeispiel mit dem Ziel durchgeführt, einen Betrieb der technischen Anlage zu optimieren.

In einem ersten Verfahrensschritt (1) wird ein computerimplementiertes Modell aus einer Datenbank 1 des Leitsystems ausgewählt. Die Datenbank 1 muss dabei nicht Teil des Leitsystems sein, sie kann vielmehr auch in einer cloudbasierten Umgebung im Speziellen oder auf einem externen Speichermedium im Allgemeinen realisiert sein. In der Datenbank 1 kann eine Vielzahl von Modellen hinterlegt sein, die beispielsweise jeweils für einen bestimmten Typ einer technischen Anlage 3 ausgelegt sind. Die Auswahl erfolgt in diesem Ausführungsbeispiel hinsichtlich des Typs der technischen Anlage 3, beispielswiese des Typs "Produktionsanlage".

In einem zweiten Verfahrensschritt (2) wird ein Teil des computerimplementierten (Grund-)Modells, welcher als ein neuronales Netz 2 ausgebildet ist, mittels eines weiteren Modells der technischen Anlage 3 trainiert. Das weitere Modell der technischen Anlage 3 weist dabei eine höhere Genauigkeit auf als das computerimplementierte (Grund-)Modell. Dies kann beispielsweise bedeuten, dass das weitere Modell eine präzisiere Modellierung von physikalischen Effekten innerhalb der technischen Anlage aufweist. Für das Trainieren des neuronalen Netzes 2 wird eine Simulation eines Betriebsverhaltens der technischen Anlage 3 unter Verwendung des weiteren Modells durchgeführt. Mit den in dieser Simulation berechneten Parametern, Werten, Wertebereichen etc. wird das neuronale Netz 2 daraufhin trainiert, d.h. angelernt.

In einem darauffolgenden Schritt (3) findet die eigentliche Simulation des Betriebsverhaltens der technischen Anlage 3 unter Verwendung des modifizierten computerimplementierten Modells statt. Diese Simulation findet parallel zu einem (realen) Betrieb der technischen Anlage 3 statt. Um das computerimplementierte Modell weiter an die Besonderheiten der technischen Anlage, bzw. an etwaige schwer vorherzusagenden Betriebszustände der technischen Anlage anzupassen, wird das computerimplementierte Modell, genauer das neuronale Netz des Modells, während des Betriebs durch Daten angepasst, die direkt aus dem Betrieb der technischen Anlage 3 gewonnen werden. Dabei kann es sich beispielsweise um direkte Sensorwerte handeln. Es können beispielsweise aber auch indirekte Werte handeln, die aus den Werten verschiedener Sensoren berechnet bzw. angenähert werden. Man spricht in diesem Zusammenhang auch von sogenannten Softsensoren oder virtuellen Sensoren.

In der betriebsparallelen Simulation werden in einem darauffolgenden Schritt (4) Parameter berechnet, die für eine Optimierung des Betriebs der technischen Anlage verwendet werden. Dabei muss die Simulation des Betriebsverhaltens für die Optimierung nicht unterbrochen werden. Vielmehr kann die Optimierung der technischen Anlage 3 "on the fly" erfolgen. Die modifizierten Parameter können dann wieder Eingang in das computerimplementierte Modell (genauer: in das neuronale Netz) finden, um die betriebsparallele Simulation entsprechend anzupassen.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Verfahren zum betriebsbegleitenden Optimieren einer technischen Anlage (3), insbesondere Prozess- oder Fertigungsanlage, bei dem parallel zu einem Betrieb der technischen Anlage (3) ein Verhalten der technischen Anlage (3) unter Verwendung eines computerimplementierten Modells der technischen Anlage (3) oder eines Typs der technischen Anlage (3) simuliert wird, wobei als Ergebnis der Simulation wenigstens ein Parameter erzeugt wird, der für eine Optimierung des Betriebs der technischen Anlage (3) verwendet wird,
**dadurch gekennzeichnet, dass**
ein Teil des computerimplementierten Modells als ein neuronales Netz (2) ausgebildet ist, welches vor dem Beginn der Simulation unter Verwendung eines weiteren Modells der technischen Anlage (3) oder eines Teils der technischen Anlage (3) trainiert worden ist.

2. Verfahren zum betriebsbegleitenden Vorhersagen eines zukünftigen Zustandes einer technischen Anlage (3), insbesondere Prozess- oder Fertigungsanlage, bei dem parallel zu einem Betrieb der technischen Anlage (3) ein Verhalten der technischen Anlage unter Verwendung eines computerimplementierten Modells der technischen Anlage (3) oder eines Typs der technischen Anlage (3) simuliert wird, wobei als Ergebnis der Simulation ein zukünftiger Zustand der technischen Anlage (3) an einen Operator der technischen Anlage ausgegeben wird,
**dadurch gekennzeichnet, dass**
ein Teil des computerimplementierten Modells als ein neuronales Netz (2) ausgebildet ist, welches vor dem Beginn der Simulation unter Verwendung eines weiteren Modells der technischen Anlage (3) oder eines Teils der technischen Anlage (3) trainiert worden ist.

3. Verfahren zum betriebsbegleitenden Bewerten eines aktuellen Betriebs einer technischen Anlage (3), insbesondere Prozess- oder Fertigungsanlage, bei dem parallel zu einem Betrieb der technischen Anlage (3) ein Verhalten der technischen Anlage unter Verwendung eines computerimplementierten Modells der technischen Anlage (3) oder eines Typs der technischen Anlage (3) simuliert wird, wobei als Ergebnis der Simulation wenigstens ein Parameter zur Bewertung des aktuellen Betriebs erzeugt und an einen Operator der technischen Anlage (3) ausgegeben wird,
**dadurch gekennzeichnet, dass**
ein Teil des computerimplementierten Modells als ein neuronales Netz (2) ausgebildet ist, welches vor dem Beginn der Simulation unter Verwendung eines weiteren Modells der technischen Anlage (3) oder eines Teils der technischen Anlage (3) trainiert worden ist.

4. Verfahren nach einem der vorangegangenen Ansprüche, bei dem eine Abweichung des Verhaltens des weiteren Modells von dem Verhalten der realen technischen Anlage (3) kleiner ist als eine Abweichung des Verhaltens des computerimplementierten Modells von dem Verhalten der technischen Anlage (3).

5. Verfahren nach einem der vorangegangenen Ansprüche, bei dem das computerimplementierte Modell während des Betriebs der technischen Anlage (3) durch von der technischen Anlage (3) erzeugte Daten angepasst wird, um die Abweichung des Verhaltens des computerimplementierten Modells von dem Verhalten der technischen Anlage (3) zu reduzieren.

6. Verfahren nach Anspruch 5, bei dem der Teil des computerimplementierten Modells angepasst wird, der als neuronales Netz (2) ausgebildet ist.

7. Leitsystem für eine technische Anlage (3), insbesondere Fertigungs- oder Prozessanlage, das dazu ausgebildet ist, das Verfahren gemäß einem der Ansprüche 1 bis 6 auszuführen.

8. Computerprogrammprodukt, umfassend Befehle, die bei der Ausführung des Programms durch einen Computer diesen veranlassen, das Verfahren nach einem der Ansprüche 1 bis 6 auszuführen.
